# EUROPÄISCHE PATENTSCHRIFT

(11) **EP 1 225 198 B1**
(45) Veröffentlichungstag und Bekanntmachung des Hinweises auf die Patenterteilung: **11.02.2009**
(21) Anmeldenummer: 01127989.0
(22) Anmeldetag: 24.11.2001
(51) Int. Cl.: C08J 9/00, C08J 9/35, C09K 3/10, C08L 75/04

(54) **Verfahren zum Herstellen eines weichelastischen Dichtungsschaumes**
Process for producing a soft elastic sealing foam
Procédé de préparation d'une mousse d'étanchéité souple et élastique

(30) Priorität: 12.01.2001 DE 10101102
(43) Veröffentlichungstag der Anmeldung: 24.07.2002
(73) Patentinhaber: Sonderhoff Chemicals GmbH, 50829 Köln (DE)
(72) Erfinder: Link, Alfred, 50129 Bergheim (DE)
(74) Vertreter: Hennicke, Ernst Rüdiger

(56) Entgegenhaltungen:
- GB-A- 922 306

## Beschreibung

Die Erfindung betrifft ein Verfahren zum Herstellen eines weichelastischen Dichtungsschaumes zur Erzeugung von im Freischäumungs- oder Formschäumungsverfahren an einem Bauteil in situ hergestellten Dichtungen, mit einer ein- oder mehrkomponentigen, aufschäumbaren Polymerdichtungsmasse, insbesondere auf Polyurethan-, Diphenylmethandiisocyanat (MDI)- oder Toluylendiisocyanat(TDI)-Basis oder einer Mischung hieraus. Die Erfindung ist ferner auf eine Polymerdichtungsmasse insbesondere auf Polyurethan-, Diphenylmethandiisocyanat (MDI) - oder Toluylendiisocyanat(TDI)-Basis oder einer Mischung hieraus gerichtet, wie sie bei dem erfindungsgemäßen Verfahren zum Einsatz kommt.

Dichtungsschäume aus Polyurethan-, MDI- und/oder TDI-Werkstoffen werden aus Polymerdichtungsmassen hergestellt, die in ihrem unaufgeschäumtem Zustand beim Auftrag auf ein Bauteil dünn- bis zähflüssig sein und auch thixotropes Verhalten aufweisen können. Die Dichtungsmassen lassen sich mit geeigneten Misch- und Dosieranlagen auf dem Bauteil im Bereich der späteren Dichtung auftragen und verfestigen sich nach ihrem Auftrag zu einem weichelastischen Dichtungsschaum, der hervorragende Dichtungseigenschaften hat. Die in-situ, also unmittelbar auf dem Bauteil hergestellten Dichtungen können dabei im Freischäumungsverfahren hergestellt werden, in dem die Polymerdichtungsmasse ohne äußere Formgebung zu einem im Schnitt etwa halboval-förmigen Dichtungswulst aufschäumt. Ein anderes Verfahren ist das Formschäumungsverfahren (transfer molding), bei dem nach dem Auftrag der Polymerdichtungsmasse über diese eine Dichtungsform gestülpt wird, deren Querschnitt dem gewünschten Querschnitt der späteren Dichtung entspricht, wobei beim Aufschäumen die Polymerdichtungsmasse sich fest an die Form anlegt und hierdurch die unterschiedlichsten Dichtungsquerschnitte erhalten werden können.

Sowohl beim Freischäumungsverfahren als auch beim Formschäumungsverfahren ist es wichtig, daß die Polymerdichtungsmasse über die gesamte Länge der späteren Dichtung in einem konstanten Mengenstrom auf dem Bauteil aufgetragen wird und während des Ausschäumens auch an jeder Stelle der Dichtung eine gleich große Menge Dichtungsmaterial vorhanden ist, damit der Querschnitt der ausgeschäumten Dichtung nach deren Verfestigen überall gleich groß ist. Das Material soll somit nach dem Auftrag auf das Bauteil seine dort erhaltene Position beibehalten und weder in Längsrichtung noch in Querrichtung der späteren Dichtung zerfließen, was einen ungleichförmigen Querschnitt der Dichtung zur Folge haben würde.

Um dieser Anforderung gerecht zu werden, wird insbesondere beim Freischäumungsverfahren ein thixotropes Fließverhalten der Polymerdichtungsmasse angestrebt, also ein Verhalten, bei dem die Dichtungsmasse nur unter dem Eindruck äußerer Mindestkraft fließfähig ist und sich bei Wegfall dieser Mindestkraft zäh oder fest verhält und erst wieder nach Überschreiten der auf die Dichtungsmasse ausgeübten Mindestkraft wieder zu fließen beginnt.

Um das gewünschte, thixotrope Fließverhalten der Polymerdichtungsmasse auf dem Bauteil zu erhalten, ist es bekannt, der Dichtungsmasse als Thixotropierungsmittel Rizinusderivate oder Kieselsäure zuzusetzen. Bei den bekannten Dichtungsschäumen kann jedoch ein bestimmter Gehalt an Thixotropierungsmitteln nicht überschritten werden, da sonst die Zellstruktur des späteren Dichtungsschaums stark geschädigt wird, wodurch dieser eine zu große Dichte erhält und es auch dazu kommen kann, daß die Dichtung an ihrer Oberfläche kollabiert und unbrauchbar wird. Bei der begrenzten Menge, in der Thixotropierungsmittel eingesetzt werden können, kann die Polymerdichtungsmasse zwar auf ebenen und geringfügig geneigten Flächen aufgetragen werden, ohne infolge der auf sie wirkenden Schwerkraft zu fließen, beim Auftrag auf stark geneigte oder gar senkrechte Flächen hingegen kommt es zu einem Fließen des mit Kieselsäure gemischten Dichtungsmaterials, so daß eine Dichtung mit gleichförmigem Querschnitt auf solchen Flächen nicht erhalten werden kann.

Um höhere Thixotropiegrade zu erreichen, ist es auch bekannt, zusätzliche Füllstoffe wie z.B. Talkum der Polymerdichtungsmasse zuzugeben, das in dieser auch in höheren Anteilen als die Kieselsäure enthalten sein kann. Da Talkum nur eine geringe Tendenz hat, die Zellstruktur der späteren Dichtungsschäume zu schädigen, kann bei entsprechend großzügiger Bemessung des Talkumgehaltes in der Polymerdichtungsmasse eine sehr hohe, scheinbare Viskosität und eine hohe Thixotropie erzielt werden, die es möglich macht, eine solchermaßen modifizierte Polymerdichtungsmasse sogar an senkrechten Flächen zu applizieren, ohne daß sie vor oder während des Ausschäumens infolge der Schwerkraft an der Fläche herabfließt.

Der Einsatz von Talkum hat jedoch die häufig sehr unerwünschte Nebenerscheinung, daß die aus der hiermit versetzten Polymerdichtungsmasse erzeugte Schaumdichtung erheblich härter ist als eine Dichtung, bei der in der Dichtungsmasse auf Talkum verzichtet wurde. In vielen Fällen ist diese größere Härte nicht akzeptabel, da die Dichtungsergebnisse der härteren Dichtung die an sie gestellten Forderungen nicht erfüllen.

Um die durch das Talkum hervorgerufenen Härtesteigerungen zumindest teilweise zu kompensieren, ist vorgeschlagen worden, im Dichtungswerkstoff einen höheren Wasseranteil zuzulassen, der einen stärkeren Treibeffekt beim Aufschäumen zur Folge hat und hierdurch die größere Härte (teilweise) ausgleicht. Einer derartigen Weicheinstellung durch Wasserzugabe sind jedoch Grenzen gesetzt durch die hierbei resultierende, höhere Wasseraufnahme des entstehenden Dichtungsschaumes sowie durch schlechtere Werte des Druckverformungsrestes.

Aufgabe der Erfindung ist es, ein Verfahren zum Herstellen eines weichelastischen Dichtungsschaumes sowie eine in diesem Verfahren einsetzbare Polymerdichtungsmasse zu schaffen, womit es möglich ist, in-situ an einem Bauteil angeschäumte Dichtungen auch an stark geneigten oder gar senkrechten Flächen herzustellen, ohne daß der fertige Dichtungsschaum eine nennenswert größere Härte aufweist als ein Schaum, der ohne oder nur mit wenig Thixotropierungsmittel auskommt.

Diese Aufgabe wird mit der Erfindung dadurch gelöst, daß der Polymerdichtungsmasse vor deren Auftrag auf das Bauteil ein Pulver aus gemahlenem Weichschaum zugesetzt wird.

Es hat sich überraschenderweise gezeigt, daß dieses Weichschaumpulver, das vorzugsweise auf derselben Materialbasis wie die Polymerdichtungsmasse selbst besteht, die Forderung nach starker Erhöhung der Viskosität bzw. des thixotropen Verhaltens, geringer zellstörender Wirkung und geringer Härtesteigerung hervorragend erfüllt. Das Weichschaumpulver, das in Fachkreisen im allgemeinen auch als "Regrind"-Pulver bezeichnet wird, wird durch Mahlen von Polyurethan-, MDI- und/oder TDI-Weichschaum hergestellt, wobei das erfindungsgemäß eingesetzte Pulver eine Korngröße hat, die kleiner ist als 150 µm.

In Laboruntersuchungen hat sich gezeigt, daß zwar die mit dem Weichschaumpulver versetzte Polymerdichtungsmasse im noch ungeschäumten Zustand eine vergleichsweise rauhe, körnige Oberfläche hat, nachdem sie auf das Bauteil aufgetragen wurde, daß aber nach dem Aufschäumen des Polymers der so erzeugte Dichtungsschaum eine glatte, ebenmäßige Oberfläche aufweist, aus der die Pulverpartikel nicht herausragen, sondern vollständig im Inneren des Dichtungsschaums eingebettet sind. Offenbar sinken die Pulverteilchen beim Aufschäumen der Dichtungsmasse in deren Oberfläche ein und befinden sich bei vollständig aufgeschäumter Dichtung allesamt im Inneren des Dichtungsstranges, wo sie an dessen Oberfläche keine Unregelmäßigkeiten verursachen können. Dieser Effekt wird noch begünstigt, wenn in bevorzugter Weiterbildung der Erfindung eine Polymerdichtungsmasse mit langer Topf- und/oder Steigzeit verwendet wird.

Bei Einsatz einer Polymerdichtungsmasse auf Polyurethanbasis wird vorzugsweise ein Weichschaumpulver aus fein zermahlenem Polyurethanweichschaum verwendet. Der Anteil des Weichschaumpulvers in der Dichtungsmasse beträgt vorzugsweise zwischen 1 und 30 Gew.-% bezogen auf das Gesamtgewicht von Dichtungsmasse und Weichschaumpulver.

Durch den Einsatz von Regrind erhält die für die Herstellung des Dichtungsschaumes eingesetzte Polymerdichtungsmasse eine sehr hohe Thixotropie, die es erlaubt, die Dichtungsmasse auch an senkrechten Flächen aufzutragen, ohne daß diese hieran herabfließt. Die unter Einsatz von Weichschaumpulver hergestellten Dichtungsschäume haben eine intakte Zellstruktur auch bei großer Menge eingesetzten Pulvers und sind verglichen mit der reinen, ungefüllten Dichtungsmasse allenfalls geringfügig härter als diese. Nach dem Aufschäumen der Dichtungsmasse ist das zugegebene Pulver in dieser mit bloßem Auge nicht mehr feststellbar, sondern es ergibt sich ein im wesentlichen homogenes Gefüge, dessen Zugfestigkeit und Bruchdehnung gegenüber dem ungefüllten Material nicht oder nur unwesentlich vermindert ist.

## Patentansprüche

1. Verfahren zum Herstellen eines weichelastischen Dichtungsschaumes zur Erzeugung von im Freischäumungs- oder Formschäumungsverfahren an einem Bauteil in-situ hergestellten Dichtungen, mit einer ein- oder mehrkomponentigen, aufschäumbaren Polymerdichtungsmasse, insbesondere auf Polyurethan-, Diphenylmethandiisocyanat (MDI)- oder Toluylendiisocyanat (TDI)-Basis, **dadurch gekennzeichnet, dass** der Polymerdichtungsmasse vor deren Auftrag auf das Bauteil ein Pulver aus ausgeschäumtem, gemahlenem Weichblockschaum zugesetzt wird, wobei das Weichblockschaumpulver eine mittlere Korngröße aufweist, die kleiner ist als 150 µm.

2. Verfahren nach Anspruch 1, **dadurch gekennzeichnet, dass** das Weichblockschaumpulver auf derselben Materialbasis besteht wie die Polymerdichtungsmasse.

3. Verfahren nach Anspruch 1 oder 2, **dadurch gekennzeichnet, dass** das Weichblockschaumpulver der Polymerdichtungsmasse bzw. einer derer Komponenten in einer Menge von 1 bis 30 Gew.-% , bezogen auf das Gesamtgewicht des Dichtungsmaterials zugegeben wird.

4. Verfahren nach einem der Ansprüche 1 bis 3, **dadurch gekennzeichnet, dass** eine Polymerdichtungsmasse mit langer Topf- und/oder Steigzeit verwendet wird.

5. Verfahren nach einem der Ansprüche 1 bis 4, **dadurch gekennzeichnet, dass** das Weichblockschaumpulver aus fein zermahlenem Polyurethan-Weichschaum besteht.

6. Polymerdichtungsmasse insbesondere auf Polyurethan-, Diphenylmethandiisocyanat(MDI)- oder Toluolendiisocyanat (TDI)-Basis, zur Herstellung eines weichelastischen Dichtüngsschaumes für in-situ an einem Bauteil angeschäumte Dichtungen, **gekennzeichnet durch** einen Zusatz von Pulver aus ausgeschäumtem, gemahlenem Weichblockschaum, wobei die mittlere Korngröße des Weichblockschaumpulvers kleiner ist als 150 µm.

7. Polymerdichtungsmasse nach Anspruch 6, **dadurch gekennzeichnet, dass** das Weichblockschaumpulver auf derselben Materialbasis wie die Dichtungsmasse besteht.

8. Polymerdichtungsmasse nach Anspruch 6 oder 7, **dadurch gekennzeichnet, dass** der Anteil des Weichblockschaumpulvers in der Dichtungsmasse zwischen 1 und 30 Gew.-%, bezogen auf das Gesamtgewicht von Dichtungsmasse und Pulver beträgt.

## Claims

1. Method of the production of a soft elastic sealing foam for the manufacture of seals at a component with a free-foaming or mould-foaming method, with a foamable polymer sealing mass having one or several components, in particular on the basis of polyurethane, diphenyl methane diisocyanate (MDI) or toluylene diisocyanate (TDI), **characterised in that** a powder of foamed, ground soft block foam is added to the polymer sealing mass prior to its application to the component, wherein the soft block foam powder comprises a medium corn size which is smaller than 150 µm.

2. Method according to claim 1, **characterised in that** the soft block foam powder consists of the same material basis as the polymer sealing mass.

3. Method according to claim 1 or 2, **characterised in that** the soft block foam powder of the polymer sealing mass or of one of its components is added in an amount of 1 to 30 % by weight related to the total weight of the sealing material.

4. Method according to one of claims 1 to 3, **characterised in that** a polymer sealing mass with a long working and/or rise time is used.

5. Method according to one of claims 1 to 4, **characterised in that** the soft block foam powder consists of finely ground polyurethane soft foam.

6. Polymer sealing mass, in particluar on the basis of polyurethane, diphenyl methane diisocyanate (MDI) or toluylene diisocyanate (TDI), for the production of a soft flexible sealing foam for seals fitted to a component in situ, **characterised by** an addition of powder of foamed, ground soft block foam, wherein the medium corn size of the soft block foam powder is smaller than 150 µm.

7. Polymer sealing mass according to claim 6, **characterised in that** the soft block foam powder consists of the same material basis as the sealing mass.

8. Polymer sealing mass according to claim 6 or 7, **characterised in that** the part of the soft block foam powder in the sealing mass is between 1 and 30 % by weight related to the total weight of sealing mass and powder.

## Revendications

1. Procédé de fabrication d'une mousse d'étanchéité souple et élastique en vue de la réalisation d'étanchéités produites in situ sur un élément de construction dans un procédé de moussage libre ou de moussage dans un moule, avec une masse d'étanchéité polymère moussable, à un ou plusieurs composants, en particulier à base de polyuréthane, de diisocyanate de diphénylméthane (MDI) ou de diisocyanate de toluylène (TDI), **caractérisé en ce qu'**on ajoute à la masse d'étanchéité polymère, avant de la déposer sur l'élément de construction, une poudre faite d'une mousse d'un bloc mou, constituée de mousse broyée, la poudre de mousse en bloc mou présentant une granulométrie moyenne inférieure à 150 µm.

2. Procédé selon la revendication 1, **caractérisé en ce que** la poudre de mousse en bloc mou se compose de la même base matérielle que la masse d'étanchéité polymère.

3. Procédé selon la revendication 1 ou 2, **caractérisé en ce que** la poudre de mousse en bloc mou est ajoutée à la masse d'étanchéité polymère, respectivement à l'un de ses composants, en une quantité de 1 à 30 % en poids, par rapport au poids total du matériau d'étanchéité.

4. Procédé selon l'une des revendications 1 à 3, **caractérisé en ce que** l'on utilise une masse d'étanchéité polymère de longue durée de conservation et/ou de durcissement.

5. Procédé selon l'une des revendications 1 à 4, **caractérisé en ce que** la poudre de mousse en bloc mou se compose d'une mousse molle de polyuréthane broyée.

6. Masse d'étanchéité polymère, en particulier à base de polyuréthane, de diisocyanate de diphénylméthane (MDI) ou de diisocyanate de toluylène (TDI), pour la fabrication d'une mousse d'étanchéité souple et élastique en vue de la production in situ d'étanchéités en mousse sur un élément de construction, **caractérisée par** l'addition d'une poudre de mousse en bloc mou, constituée de mousse broyée, la granulométrie moyenne de la poudre de mousse en bloc mou étant inférieure à 150 µm.

7. Masse d'étanchéité polymère selon la revendication 6, **caractérisée en ce que** la poudre de mousse en bloc mou se compose de la même base matérielle que la masse d'étanchéité.

8. Masse d'étanchéité polymère selon la revendication 6 ou 7, **caractérisée en ce que** la proportion de la poudre de mousse en bloc mou dans la masse d'étanchéité se situe entre 1 et 30 % en poids, par rapport au poids total de la masse d'étanchéité et de la poudre.
